# EUROPÄISCHE PATENTSCHRIFT

(11) **EP 0 745 199 B1**
(45) Veröffentlichungstag und Bekanntmachung des Hinweises auf die Patenterteilung: **19.08.1998**
(21) Anmeldenummer: 95908278.5
(22) Anmeldetag: 14.02.1995
(51) Int. Cl.: F16H 61/06

(54) **LASTSCHALTBARES GETRIEBE, INSBESONDERE ZWEIGANG-PLANETENGETRIEBE**
POWER SHIFTABLE GEAR, ESPECIALLY TWO-SPEED PLANET GEAR
BOITE DE VITESSES COUPLABLE SOUS CHARGE, NOTAMMENT BOITE PLANETAIRE A DEUX VITESSES

(30) Priorität: 19.02.1994 DE 4405299
(43) Veröffentlichungstag der Anmeldung: 04.12.1996
(73) Patentinhaber: ZF FRIEDRICHSHAFEN Aktiengesellschaft, 88038 Friedrichshafen (DE)
(72) Erfinder: LEGNER, Jürgen, D-88048 Friedrichshafen (DE)
(86) Internationale Anmeldenummer: EP9500531
(87) Internationale Veröffentlichungsnummer: WO9522705

(56) Entgegenhaltungen:
- EP-A- 0 314 193
- WO-A-89/08796
- WO-A-94/07060
- DATABASE WPI Week 8929 Derwent Publications Ltd., London, GB; AN 89-208046 & DE,A,38 44 126 (AKEBONO) , 13.Juli 1989

## Beschreibung

Die Erfindung bezieht sich auf ein lastschaltbares Getriebe, insbesondere ein Zweigang-Getriebe, das vorzugsweise als Planetengetriebe ausgebildet ist. Die Gangstufen dieses Getriebes sind durch hydraulisch betätigbare Reibungskupplungen zu schalten. Die Reibelemente (Innen- und Außenlamellen) der Reibungskupplungen werden durch Federkraft geschlossen und durch Öldruck geöffnet.

Bei einem aus der WO 89/08796 bekannten gattungsgemäßen Lastschaltgetriebe können zwei Gänge geschaltet werden. Beim Schalten der Gänge werden Reibungskupplungen (eine dieser Reibungskupplungen wirkt als Bremse) wechselweise geöffnet und geschlossen. Das Schließen der Reibungskupplungen erfolgt über Tellerfedern. Wenn beide Reibungskupplungen drucklos, d. h. geschlossen sind, ist der An- und Abtrieb blockiert (Parkbremse).

Durch die relativ hohen Kräfte der Tellerfeder wird das Druckmedium (Hydrauliköl) aus den jeweiligen Druckräumen in sehr kurzer Zeit zum Tank abgeführt. Die Zeit, die zum Öffnen der Reibungskupplungen benötigt wird, ist abhängig von der Fördermenge einer Druckmittelquelle (Pumpe).

Durch den Einbau von Rückschlagventilen mit parallel geschalteten Drosseln in den zu den Druckräumen führenden Leitungen kann sichergestellt werden, daß das wechselweise Öffnen und Schließen der Reibungskupplungen derart abgestimmt erfolgt, daß die zu schließende Reibungskupplung erst dann geschlossen wird, wenn die zu öffnende Reibungskupplung geöffnet ist.

Die um die Drosseln ergänzten Rückschlagventile sind so angeordnet, daß der Ölstrom beim Öffnen ungehindert in den jeweiligen Druckraum fließen kann. Beim Schließen wird der aus dem Druckraum verdrängte Ölstrom gedrosselt in den Tank abgeführt.

Mit den erwähnten Ventilen kann der Zeitpunkt des Schließens beeinflußt werden. Der Schließvorgang selbst, d. h. die zeitliche Drehmomentaufnahme der Reibungskupplung, kann dadurch nicht beeinflußt werden. Sobald der auf die Reibelemente im Sinne eines Schließens einwirkende Kolben das Lüftspiel (Summe der Abstände der Innen- und Außenlamellen einer Reibungskupplung im geöffneten Zustand) überwunden hat, steigt das von den Reibelementen übertragbare Drehmoment schlagartig auf den Maximalwert an. Da der Schließvorgang sehr kurzzeitig erfolgt, macht sich dies, insbesondere bei einer Rückschaltung vom zweiten in den ersten Gang, in einer harten Schaltung bemerkbar, die als besonders unangenehm empfunden wird.

Ein älterer, nicht vorveröffentlichter Vorschlag der Anmelderin gemäß WO-A-94-07060, veröffentlicht am 31. März 1994, - von dem bei der vorliegenden Erfindung ausgegangen wird - befaßt sich mit Mitteln, die verhindern, daß bei einer Schaltung zunächst die volle Schließkraft auf die Reibelemente der Reibungskupplungen wirkt. Damit kann insbesondere der Drehmomentenverlauf beinflußt werden, so daß ein hartes Schalten vermieden wird.

Der vorliegenden Erfindung liegt die Aufgabe zugrunde, den Druck- und Drehmomentenverlauf bei einer Rück- bzw. Hochschaltung weiter zu verbessern.

Die gestellte Aufgabe löst ein lastschaltbares Getriebe, insbesondere ein als Planetengetriebe ausgebildetes Zweigang-Getriebe, mit mindestens einer Reibungskupplung, deren Reibelemente durch Federkraft geschlossen und durch Öldruck geöffnet werden, mit einer zu einem Druckraum führenden Leitung, in der ein Speicher liegt, der aus einem Zylinder und einem federbelasteten Kolben mit einem Rückschlagventil und einer zu diesem parallel geschalteten Drossel gebildet ist.

Hiermit wird zunächst verhindert, daß bei auf den Wert von Null oder nahe Null reduziertem Lüftspiel der Reibelemente die volle Federkraft auf die Reibelemente wirkt. Ferner liegt der Speicher derart in der zum Druckraum der Reibungskupplung führenden Leitung, daß während des Schließens der Reibungskupplung die Phase bis zum Beginn der Übernahme des Drehmoments verkürzt wird. Eine Zugkraftunterbrechung findet praktisch nicht statt.

Bei einem bevorzugten Ausführungsbeispiel nimmt der Kolben bei geöffneter Reibungskupplung eine Stellung ein, in der der Speicher ein Minimum an Speichervolumen aufweist.

Da der Speicher bei geöffneter Reibungskupplung praktisch leer ist, kann in sehr vorteilhafter Weise mit Beginn des Schließens der Reibungskupplung, d. h. mit dem Tank verbundener Leitung und geschlossenem Rückschlagventil, sofort ein Teil des im Druckraum befindlichen Druckmittels in den Speicher überführt werden. Der Speicher weist dann ein Maximum an Speichervolumen auf.

Ein stetiger Drehmomentenverlauf schließt sich an, wenn das restliche im Druckraum verbliebene Druckmittel über die Drossel im weiteren Verlauf der Schließbewegung der Reibungskupplung abläuft.

Besonders vorteilhaft ist es, wenn das Verhältnis des Volumens des Druckraums bei geöffneter Reibungskupplung zum maximalen Speichervolumen etwa 2:1 gewählt ist. Durch die Wahl eines geeigneten Verhältnisses beider Volumina kann die Zeit bis zum Beginn der Drehmomentenübernahme einfach variiert werden.

Weitere, für die Erfindung wesentliche Merkmale und die daraus resultierenden Vorteile sind der nachfolgenden Beschreibung eines Ausführungsbeispiels zu entnehmen. Es zeigt:
- Fig. 1: einen Querschnitt durch ein lastschaltbares Getriebe in schematischer Darstellung sowie die zur Schaltung des Getriebes erforderlichen Elemente;
- Fig. 2: das lastschaltbare Getriebe nach Fig. 1 in einer weiteren Schaltstellung;
- Fig. 3: ein Diagramm, das den Druckverlauf über der Zeit bei einer Rück-/Hochschaltung wiedergibt und
- Fig. 4: ein Diagramm, das den Drehmomentenverlauf bei einer Rück-/Hochschaltung darstellt.

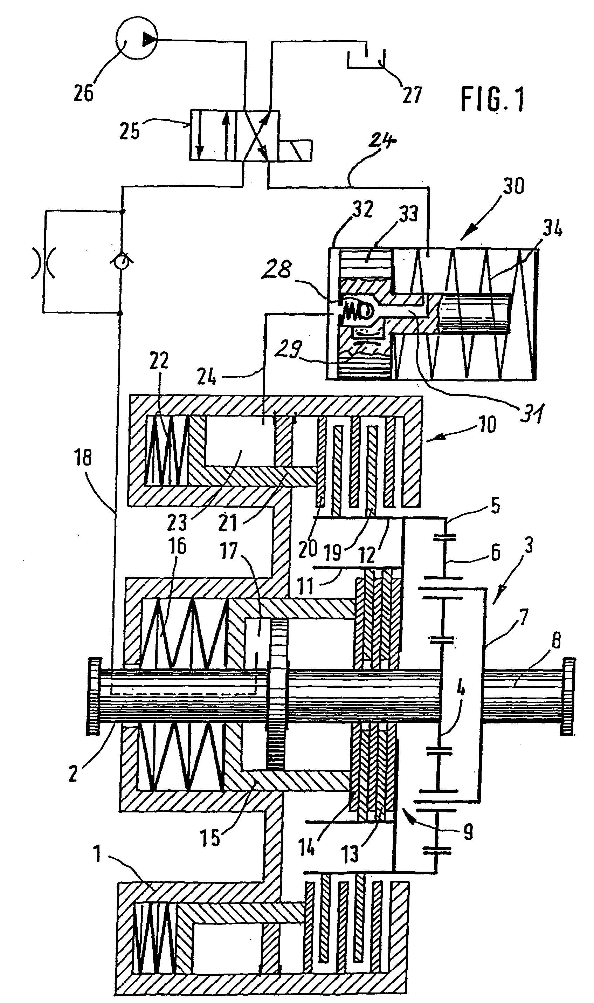

Bei dem in Fig. 1 schematisch im Querschnitt dargestellten Getriebe handelt es sich um ein hydraulisch lastschaltbares Zweigang-Getriebe. In einem Gehäuse 1 ist eine Antriebswelle 2 drehbar gelagert. Die Antriebswelle 2 wird von einem selbst nicht dargestellten Antriebsmotor angetrieben. Hierbei kann es sich beispielsweise um einen stufenlos verstellbaren Hydraulikmotor oder einen Elektromotor handeln. Das hydraulisch lastschaltbare Getriebe ist vorzugsweise als Planetengetriebe 3 ausgebildet. Das Planetengetriebe 3 setzt sich im einzelnen aus einem inneren Zentralrad 4, einem äußeren Zentralrad 5, mehreren Planetenrädern 6 und einem Planetenträger 7 zusammen. Die Planetenräder 6 sind auf dem Planetenträger 7 drehbar gelagert, während letzterer drehfest mit einer Abtriebswelle 8 verbunden ist. Die Abtriebswelle 8 kann mit einer selbst nicht dargestellten Stirnradstufe in Antriebsverbindung stehen, über die eine Abtriebswelle zum Antrieb der Räder eines Radladers oder dergleichen angetrieben wird.

Die beiden Gangstufen des lastschaltbaren Getriebes sind über zwei Reibungskupplungen 9 und 10 hydraulisch schaltbar. Hierbei ist die außenliegende Reibungskupplung 10 vorzugsweise zur innenliegenden Reibungskupplung 9 konzentrisch liegend angeordnet und als Bremse ausgeführt. Ungeachtet ihrer Funktion als Bremse wird dieses Bauteil als Reibungskupplung bezeichnet.

Das äußere Zentralrad 5 weist zwei Lamellenträger 11 und 12 auf. Vorzugsweise sind diese Lamellenträger 11 und 12 zusammen mit dem äußeren Zentralrad 5 als einstückiges Bauteil gefertigt.

Der in der Zeichnung innenliegende Lamellenträger 11 nimmt Außenlamellen 13 der Reibungskupplung 9 in bekannter Weise drehfest und axial verschieblich auf. Dazugehörige Innenlamellen 14 sind in bekannter Weise auf der Antriebswelle 2 drehfest und axial beweglich angeordnet.

Im Gehäuse 1 ist ein topfförmig gestalteter Kolben 15 axial beweglich geführt. Dieser Kolben ist durch mehrere Tellerfedern 16 in der Weise belastet, daß er im Schließsinne auf die Außen- und Innenlamellen 13 und 14 der Reibungskupplung 9 verschoben wird. Im Inneren des Kolbens 15 befindet sich ein Druckraum 17, zu dem eine erste Leitung 18 führt, durch die Druckmittel, z. B. Öl, zu- oder abgeführt wird.

Aus dem bisher Gesagten folgt, daß die Reibungskupplung 9 bei drucklosem Druckraum 17 durch die Kraft der Tellerfedern 16, die den Kolben 15 belastet und - bezogen auf die Zeichnung - nach rechts verschiebt, geschlossen wird. Wird hingegen der Druckraum 17 mit Druckmittel beaufschlagt, wird die Reibungskupplung 9 gegen die Kraft der Tellerfedern 16 geöffnet, d. h. der Kolben 15 bewegt sich - bezogen auf die Zeichnung - nach links

Die Reibelemente der Reibungskupplung 10 bestehen aus Innenlamellen 19, die auf dem Lamellenträger 12 des äußeren Zentralrades 5 gehaltert sind und Außenlamellen 20, die im Gehäuse 1 in bekannter Weise angeordnet sind. Zum Öffnen und Schließen der Reibungskupplung 10 ist ein weiterer Kolben 21 vorgesehen, der axial gleitend im Gehäuse 1 geführt ist und auf den eine durch Tellerfedern 22 ausgeübte Kraft wirkt. Eine Leitung 24 führt von einem Speicher 30 zu einem Druckraum 23.

Wie aus der Zeichnung ersichtlich, befindet sich die Reibungskupplung 9 im geschlossenen Zustand, während die Reibungskupplung 10 geöffnet ist. Es ist der zweite Gang geschaltet. Das Drehmoment der Antriebswelle wird zum einen über die geschlossene Reibungskupplung 9 und das äußere Zentralrad 5 auf die Planetenräder 6 und zum anderen über das innere Zentralrad 4 auf die Planetenräder 6 geleitet. Der Planetenradträger 7 überträgt dann die summierte Leistung auf die Abtriebswelle 8.

Die Leitungen 18 und 24 sind über ein Schaltventil 25, das als 4/2-Wegeventil ausgebildet ist, entweder mit einer Pumpe 26 oder mit einem Tank 27 verbindbar. In der Leitung 18 kann, wie in der Zeichnung dargestellt, zwischen dem Schaltventil 25 und dem Druckraum 17 ein Rückschlagventil eingeschaltet sein, zu dem eine Drossel parallel geschaltet ist. Das Rückschlagventil erlaubt ein ungehindertes Beaufschlagen des Druckraums 17 mit Drucköl, während der Rücklauf des Ölstroms aus dem Druckraum 17 zum Tank 27 gedrosselt ist.

Die Leitung 24 weicht von der vorstehend erläuterten Ausgestaltung ab. Ein erstes Teilstück dieser Leitung ist an einen Speicher 30 angeschlossen.

Der Speicher 30 besteht prinzipiell aus einem Zylinder 32, in dem ein Kolben 33 axial verschieblich geführt ist.

Der Kolben 33 ist beispielsweise durch eine Schraubendruckfeder 34 federbelastet. Der Kolben 33 unterteilt den Speicher 30 in zwei Räume. In den ersten, in der Zeichnung rechts liegenden Raum (in dem die Schraubendruckfeder untergebracht ist), mündet das erste Teilstück der Leitung 24. Von dem zweiten, in der Zeichnung rechts liegenden Raum, führt ein zweites Teilstück der Leitung 24 zum Druckraum 23 der Reibungskupplung 10.

Das erste und das zweite Teilstück der Leitung 24 stehen über einen Kanal 31 miteinander in Verbindung. Der Kanal 31 kann beispielweise aus Bohrungen gebildet sein, die den Kolben 33 durchsetzen. Der Kanal 31 kann als Bestandteil der Leitung 24 aufgefaßt werden.

In den Kolben, und zwar innerhalb des Kanals 31 liegend, ist ein Rückschlagventil 28 mit einer parallel geschalteten Drossel 29 integriert. Wird die Reibungskupplung geöffnet (vgl. Fig.1), fließt Druckmittel von der Pumpe 26 über das Schaltventil 25 zum Speicher 30 und durch den Kanal 31 bei geöffnetem Rückschlagventil 28 zum Druckraum 23. Der Kolben 33 nimmt seine gezeichnete - linke - Endlage ein. In dieser Stellung ist praktisch kein Druckmittel im Speicher 30 gespeichert. Die Reibungskupplung 10 ist geöffnet; der 2. Gang ist geschaltet.

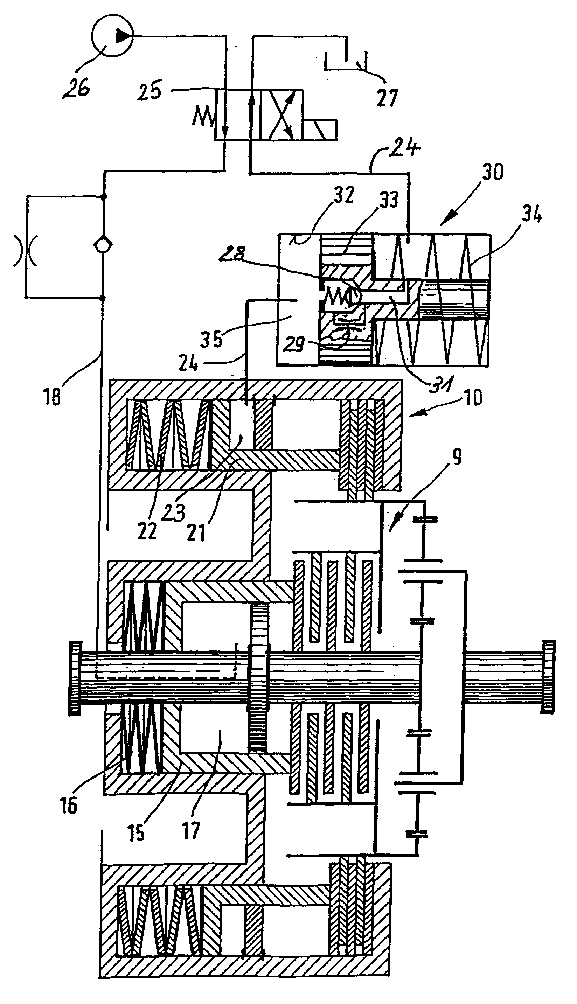

Bei einer Rückschaltung vom zweiten in den ersten Gang wechselt das Schaltventil 25 seine Schaltstellung und nimmt die in Fig. 2 eingezeichnete Schaltposition ein. Die Leitung 18 ist mit der Pumpe 26 verbunden. Beim Rückschalten wird der Druckraum 17 mit Druckmittel gefüllt. Der Kolben 15 bewegt sich gegen die Kraft der Tellerfedern 16 nach links. Die Reibungskupplung 9 wird geöffnet.

Mit dem Wechsel der Schaltstellung des Schaltventils 25 wird sofort ein Teilvolumen des im Druckraum 23 der Reibungskupplung 10 eingeschlossenen Druckmittels in den - links liegenden - zylinderraum des Speichers 30 überführt.

Das Speichervolumen 35 erreicht praktisch verzögerungsfrei ein Maximum. Das im Druckraum noch verbleibende Volumen des Druckmittels beträgt etwa die Hälfte des Ausgangsvolumens bzw., anders ausgedrückt, der Speicher übernimmt sofort die Hälfte des Ausgangsvolumens. Hierbei bewegen sich die Reibelemente (Innen- und Außenlamellen 19 und 20) der Reibungskupplung 10 aufeinander zu, bis das Lüftspiel schließlich den Wert Null annimmt. Dieser Schaltzustand ist in Fig. 2 dargestellt.

Um zu verhindern, daß die Reibungskupplung 10 schlagartig das volle Drehmoment überträgt, wenn das Lüftspiel der Reibelemente auf den Wert von Null reduziert wird, fließt das im Speicher 30 eingeschlossene Druckmittel (Speichervolumen 35) nunmehr (das Rückschlagventil 28 ist geschlossen) über die Drossel 29 und die Leitung 24 zum Tank 27 ab. Der Zeitverlauf kann durch die Kennlinie der Schraubendruckfeder 34 und die Auslegung der Drossel 29 beeinflußt werden. Der Speicher 30 übernimmt eine Haltefunktion in der Weise, daß in der Leitung 24 zwischen dem Druckraum 23 und dem Rückschlagventil 28 ein Haltedruck bestehenbleibt. Dieser Haltedruck wird nicht schlagartig, sondern stetig durch den Abfluß des im Speicher 30 eingeschlossenen Drucköls über die Drossel 29 abgebaut. Durch den stetigen Abbau dieses Haltedrucks wird die Reibungskupplung 10 mit einem stetigen Übergang letztlich vollständig geschlossen. In dieser Übergangsphase (Rutschphase der Reibelemente der Reibungskupplung 10) läuft der Kolben 33 unter der Kraft der Schraubendruckfeder 34 nach links, bis das Speichervolumen 35 seinen Minimalwert erreicht hat. Die Tellerfedern 22 überführen den Kolben 21 in seine endgültige Schließposition.

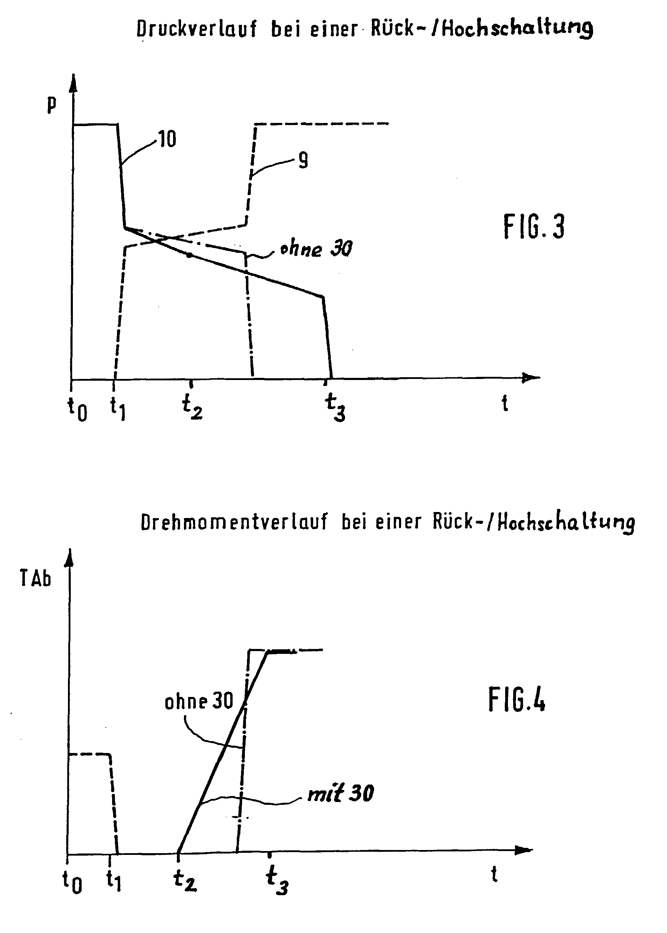

Dem Diagramm nach Fig. 3 sind die Druckverläufe über der Zeit zu entnehmen. Zum Zeitpunkt tl wird die Rückschaltung eingeleitet. Das Gangventil 25 wird umgeschaltet. Die ausgezogenen Linien gelten für den Druckverlauf im Druckraum 23. Vom Zeitpunkt tl bis zum Zeitpunkt t2 wird das Speichervolumen 35 aufgebaut. Die Phase einer Zugkraftunterbrechung (Zeitraum tl bis t2) ist demnach äußerst kurz. Im Zeitraum von t2 nach t3 wird die Reibungskupplung 10 durch stetigen Druckabbau geschlossen, so daß der Schaltvorgang weich verläuft. Vom Zeitpunkt t3 an fällt der Druck im Druckraum 23 schnell auf Null ab.

Dem Diagramm entsprechend Fig. 4 ist der Drehmomentenverlauf der Rückschaltung zu entnehmen. Die Drehmomentenaufnahme der sich schließenden Reibungskupplung 10 beginnt zum Zeitpunkt t2. Ohne den Speicher würde der Drehmomentenanstieg - zu einem späteren Zeitpunkt, d. h. mit einer längeren Phase einer Zugkraftunterbrechung - sehr steil verlaufen, wie dies durch die strichpunktierte Linie dargestellt ist.

Der Schließvorgang kann in mehrfacher Hinsicht beeinflußt werden. Eine zeitliche Veränderung ist durch veränderliche Querschnitte der Drossel 29 möglich. Der Schließvorgang kann durch die Auslegung der Kennlinie der Schraubendruckfeder 34 (selbstverständlich ist die Verwendung einer anderen geeigneten Feder möglich) und durch das Speichervolumen 35 beeinflußt werden.

Die Erfindung kann auch bei rotierenden Reibungskupplungen eingesetzt werden.

Abschließend sei darauf hingewiesen, daß die erfindungsgemäße Anordnung selbstverständlich sowohl bei Rückschalt- als auch bei Hochschaltvorgängen gleichermaßen eingesetzt werden kann.

### Bezugszeichen

- 1: Gehäuse
- 2: Antriebswelle
- 3: Planetengetriebe
- 4: inneres Zentralrad
- 5: äußeres Zentralrad
- 6: Planetenrad
- 7: Planetenradträger
- 8: Abtriebswelle
- 9: Reibungskupplung
- 10: Reibungskupplung
- 11: Lamellenträger
- 12: Lamellenträger
- 13: Außenlamellen
- 14: Innenlamellen
- 15: Kolben
- 16: Tellerfeder
- 17: Druckraum
- 18: Leitung
- 19: Innenlamellen
- 20: Außenlamellen
- 21: Kolben
- 22: Tellerfeder
- 23: Druckraum
- 24: Leitung
- 25: Schaltventil
- 26: Pumpe
- 27: Tank
- 28: Rückschlagventil
- 29: Drossel
- 30: Speicher
- 31: Kanal
- 32: Zylinder
- 33: Kolben
- 34: Schraubendruckfeder
- 35: Speichervolumen

## Patentansprüche

1. Lastschaltbares Getriebe, insbesondere als Planetengetriebe (3) ausgebildetes Zweigang-Getriebe, mit mindestens einer Reibungskupplung (9 bzw. 10), deren Reibelemente (13, 14 bzw. 19, 20) durch Federkraft (16, 22) geschlossen und durch Öldruck geöffnet werden, und mit einer zu einem Druckraum (17 bzw. 23) führenden Leitung (18 bzw. 24), dadurch **gekennzeichnet**, daß in der Leitung (18 bzw. 24) ein Speicher (30) liegt, der aus einem Zylinder (32) und einem federbelasteten Kolben (33) mit einem Rückschlagventil (28) und einer zu diesem parallel geschalteten Drossel (29) gebildet ist.

2. Getriebe nach Anspruch 1, dadurch **gekennzeichnet**, daß der Kolben (33) bei geöffneter Reibungskupplung (9 bzw. 10) eine Stellung einnimmt, in der der Speicher ein Minimum an Speichervolumen (35) aufweist.

3. Getriebe nach Anspruch 1, dadurch **gekennzeichnet**, daß in den Speicher (30) mit Beginn des Schließens der Reibungskupplung (9 bzw. 10) bei mit dem Tank (27) verbundener Leitung (18 bzw. 24) und geschlossenem Rückschlagventil (28) ein Teil des im Druckraum (17 bzw. 23) befindlichen Druckmittels überführt wird, wobei der Speicher (30) ein Maximum an Speichervolumen (35) aufweist.

4. Getriebe nach Anspruch 3, dadurch **gekennzeichnet**, daß das restliche, im Druckraum (17 bzw. 23) verbleibende Druckmittel über die Drossel (29) im weiteren Verlauf der Schließbewegung der Reibungskupplung (9 bzw. 10) abläuft.

5. Getriebe nach den Ansprüchen 3 und 4, dadurch **gekennzeichnet**, daß das Verhältnis des Volumens des Druckraums (17 bzw. 23) bei geöffneter Reibungskupplung (9 bzw. 10) zum maximalen Speichervolumen (35) etwa 2:1 ist.

## Claims

1. A power shiftable gear, especially a two-speed gear constructed as a planetary gear (3), comprising at least one friction clutch (9 or 10 respectively), the friction elements (13, 14 or 19, 20 respectively) of which are closed by spring force (16, 22) and opened by oil pressure, and comprising a line (18 or 24 respectively) leading to a pressure chamber (17 or 23 respectively), characterised in that an accumulator (30) is located in the line (18 or 24 respectively), which accumulator (30) consists of a cylinder (32) and a spring-loaded piston (33) with a non-return valve (28) and a choke (29) connected in parallel therewith.

2. A gear according to claim 1, characterised in that, when the friction clutch (9 or 10) is open, the piston (33) assumes a position in which the accumulator comprises a minimum accumulator volume (35).

3. A gear according to claim 1, characterised in that, when closure of the friction clutch (9 or 10 respectively) starts, the line (18 or 24 respectively) being connected with the tank (27) and the non-return valve (28) being closed, part of the hydraulic fluid present in the pressure chamber (17 or 23 respectively) is transferred into the accumulator (30), wherein the accumulator (30) comprises a maximum accumulator volume (35).

4. A gear according to claim 3, characterised in that the residual hydraulic fluid remaining in the pressure chamber (17 or 23 respectively) drains off via the choke (29) as the closure movement of the friction clutch (9 or 10 respectively) continues.

5. A gear according to either one of claims 3 and 4, characterised in that, when the friction clutch (9 or 10 respectively) is open, the ratio of the volume of the pressure chamber (17 or 23 respectively) to the maximum accumulator volume (35) is approximately 2:1.

## Revendications

1. Boîte de vitesses embrayable en charge, notamment boîte de vitesses planétaire (3) conçue sous la forme d'une boîte de vitesses à deux vitesses comportant au moins un embrayage à friction (9, respectivement 10), dont les éléments de friction (13, 14, respectivement 19, 20) sont fermés par force de ressort (16, 22) et ouverts par pression d'huile et une conduite (18, respectivement 24) conduisant à une chambre à pression (17, respectivement 23), **caractérisé** en ce que dans la conduite (18, respectivement 24) se trouve un réservoir (30) formé par un piston (33) soumis à charge de ressort avec une soupape anti-retour (28) et un clapet d'étranglement (29) mis en parallèle à celle-ci.

2. Boîte de vitesses selon la revendication 1, **caractérisée** en ce que le piston (33) adopte une position dans laquelle l'accumulateur présente un volume d'accumulateur (35) minimum lorsque l'embrayage à friction (9, respectivement 10) est ouvert.

3. Boîte de vitesses selon la revendication 1, **caractérisée** en ce que, lors du début de la fermeture de l'embrayage à friction (9, respectivement 10), avec conduite (18, respectivement 24) reliée au le réservoir (27) et soupape anti-retour (28) fermée, une partie du fluide sous pression se trouvant dans la chambre à pression (17, respectivement 23) est transférée dans le réservoir (30), le réservoir (30) présentant alors un volume de réservoir (35) maximum.

4. Boîte de vitesses selon la revendication 3, **caractérisée** en ce que le reste du fluide sous pression restant dans la chambre à pression (17, respectivement 23) s'écoule durant la continuation du processus de fermeture de l'embrayage à friction (9, respectivement 10) par le clapet d'étranglement (29).

5. Boîte de vitesses selon revendications 3 et 4, **caractérisée** en ce que le rapport entre le volume de la chambre à pression (17, respectivement 23) et le volume maximum du réservoir (25) est environ 2:1 avec embrayage à friction (9, respectivement 10) ouvert.
